# FASCICULE DE BREVET EUROPEEN

(11) **EP 1 601 916 B1**
(45) Date de publication et mention de la délivrance du brevet: **16.05.2007**
(21) Numéro de dépôt: 04718674.7
(22) Date de dépôt: 09.03.2004
(51) Int. Cl.: F24F 1/00

(54) **ENSEMBLE DE FILTRATION ET DE TRAITEMENT DE COMPOSES ORGANIQUES, SON PROCEDE DE FABRICATION ET APPAREIL DE CONDITIONNEMENT D A IR EQUIPE D UN TEL ENSEMBLE**
EINHEIT FÜR FILTRATION UND BEHANDLUNG VON ORGANISCHEN VERBINDUNGEN, VERFAHREN FÜR IHRE HERSTELLUNG UND KLIMAANLAGE MIT SOLCHER EINHEIT
UNIT FOR FILTERING AND TREATMENT OF ORGANIC COMPOUNDS, METHOD FOR PRODUCTION THEREOF AND AIR-CONDITIONING UNIT PROVIDED WITH SUCH A UNIT

(30) Priorité: 10.03.2003 FR 0302934
(43) Date de publication de la demande: 07.12.2005
(73) Titulaire: COMPAGNIE INDUSTRIELLE D'APPLICATIONS THERMIQUES C.I.A.T., 01350 Culoz (FR)
(72) Inventeur: RUTMAN, Emmanuel, F-73310 Serrieres en Chautagne (FR); PETIT, Philippe, F-73310 Ruffieux (FR); CLAVEL, Roland, F-73420 Le Vivier du Lac (FR); BOIS, Christian, 01350 beon (FR)
(74) Mandataire: Myon, Gérard Jean-Pierre
(86) Numéro de dépôt international: PCT/FR2004/000559
(87) Numéro de publication internationale: WO 2004/081458

(56) Documents cités:
- EP-A- 0 798 143
- EP-A- 1 281 429
- DE-A- 4 023 995

## Description

L'invention a trait à un ensemble de filtration d'air et de traitement de composés organiques, à un procédé de fabrication d'un tel ensemble et un appareil de conditionnement d'air, notamment pour bâtiment, équipé d'un tel ensemble.

Il est connu d'équiper une machine de conditionnement d'air d'un filtre à charbon actif qui permet d'adsorber les molécules organiques présentes dans l'atmosphère, notamment lors de pics de pollution. L'adsorption avec du charbon actif est actuellement l'une des techniques les plus performantes pour traiter les vapeurs organiques présentes dans les effluents industriels gazeux. L'inconvénient de ce type de filtre est la saturation relativement rapide du média filtrant correspondant au point de percée du charbon.

Pour améliorer le pouvoir filtrant de certain média, on a pu envisager, comme dans FR-A-2 812 825 d'associer dans un même média filtrant un agent photocatalyseur et du charbon actif apposés sous la forme de deux couches recouvrant un support perméable. Un tel média filtrant n'a pas, jusqu'à présent, été utilisé pour un appareil de conditionnement d'air.

Il est par ailleurs connu de EP-A-0 798 143 d'utiliser, dans le domaine des véhicules automobiles, un filtre à photocatalyse pour piéger principalement des composés de type NOₓ, ceci afin de traiter les odeurs, notamment de tabac, qu'on trouve dans les véhicules. Ces filtres à photocatalyse peuvent être associés à des filtres à adsorption distincts visant à retirer des gaz neutres contenant des composés aromatiques. Lorsqu'un filtre à photocatalyse est utilisé, il n'est pas prévu que ce filtre contienne du charbon actif. En outre, le dispositif de filtration ainsi créé doit être installé pièce par pièce dans un passage de purification d'air et n'est, en pratique, compatible qu'avec de faibles débits d'air, tel qu'on peut en rencontrer pour le traitement du volume intérieur d'un véhicule automobile. Enfin, la lampe utilisée doit être mise en place dans un conduit dans lequel sont logés les filtres, ce qui est long et fastidieux.

C'est à ces inconvénients qu'entend plus particulièrement remédier l'invention, en proposant un ensemble de filtration et de traitement de composés organiques pour un appareil de conditionnement d'air pouvant être utilisé dans le domaine du bâtiment dont la construction est aisée et compatible avec les vitesses de passage d'air comprises entre 0 et 3 mètres par seconde (m/s), voire plus.

Dans cet esprit, l'invention concerne un ensemble de filtration et de traitement de composés organiques pour appareil de conditionnement d'air comprenant au moins un média filtrant, alors que :
- le média filtrant comprend un agent d'adsoption et un agent photocatalyseur ;
- le média filtrant est réparti dans deux modules filtrants destinés à être successivement traversés par le flux d'air à filtrer et à traiter et
- des moyens d'éclairement de l'agent photocatalyseur sont intercalé entre les modules filtrants
caractérisé en ce que les moyens d'éclairement sont disposés dans un module traversé par le flux et constituant, avec les modules filtrant, l'ensemble de filtration.

Au sens de la présente invention, un appareil de conditionnement d'air est un appareil qui comprend au moins une unité de traitement de l'air pour faire varier l'une de ses propriétés physiques. Un tel appareil peut être une centrale, un ventilo-convecteur, un climatiseur, une armoire de contrôle pour local informatique, etc...

Grâce à l'invention, la construction de l'ensemble de filtration et de traitement sous forme de trois modules destinés à être successivement traversés par le flux d'air permet d'optimiser sa fabrication en adaptant ses dimensions transversales et les propriétés de ses différents modules à l'appareil auquel il doit être associé ainsi qu'au type d'air à traiter et filtrer. Cet ensemble formé de trois modules constitue, de façon avantageuse mais non obligatoire, un dispositif unitaire pouvant aisément être préfabriqué et stocké en vue de son intégration dans l'appareil de conditionnement d'air.

Selon des aspects avantageux, un ensemble de filtration et de traitement d'air peut incorporer une ou plusieurs des caractéristiques suivantes :
- L'agent d'adsorption et l'agent photocatalyseur sont répartis respectivement sur un ou respectivement les deux côtés d'un support perméable. Dans ce cas, on peut prévoir que l'agent d'adsorption est réparti sur le côté amont du média filtrant disposé dans le module filtrant amont et sur le côté aval du média filtrant disposé dans le module filtrant aval, alors que l'agent photocatalyseur est réparti sur le côté aval du média filtrant disposé dans le module filtrant amont et sur le côté amont du média filtrant disposé dans le module filtrant aval. Ainsi, l'agent photocatalyseur est orienté vers les lampes du module d'éclairement, ce qui favorise son action, alors que l'agent d'adsorption ne perturbe pas l'action du rayonnement, notamment ultra-violet, qui fait passer certains électrons de l'agent photocatalyseur de la bande de valence à la bande de conduction. L'agent photocatalyseur peut être du TiO₂ ou tout autre agent adapté, alors que l'agent d'adsoption peut être, par exemple, du charbon actif.
- Les modules précités sons assemblés entre eux de façon réversible, ce qui permet de les séparer pour accéder au module d'éclairement, notamment en vue d'une opération de maintenance au niveau des lampes.
- Le module d'éclairement incorpore des lampes à ultra-violets et, éventuellement des dispositifs d'alimentation de ces lampes. Toute la fonction d'éclairement est alors contenue dans ce module.
- Le module d'éclairement est pourvu d'au moins une plaque séparant deux lampes voisines et revêtue, sur l'une au moins de ses faces, d'agent photocatalyseur.
- Le média filtrant est plissé, en vue de l'optimisation de la surface filtrante et l'éclairement obtenus, dans les modules filtrants, ce qui permet d'augmenter sa surface active sans augmenter les dimensions transversales de ces modules.

L'invention concerne également un procédé de fabrication d'un ensemble de filtration et de traitement tel que précédemment décrit qui comprend des étapes consistant à :
- sélectionner les carcasses des modules en fonction des dimensions de l'appareil de conditionnement d'air à équiper ;
- sélectionner le média filtrant en fonction du type des particules à traiter;
- sélectionner le type, le nombre et la puissance des lampes du module d'éclairement et
- intercaler le module d'éclairement entre les modules filtrants.

De façon avantageuse mais non obligatoire, on peut prévoir d'assembler les modules en un ensemble unitaire apte à être intégré dans l'appareil précité.

L'invention concerne enfin un appareil de conditionnement d'air, notamment pour des bâtiments industriels, tertiaires et/ou résidentiels, équipé d'un ensemble de filtration et de traitement tel que précédemment décrit.

De façon avantageuse, un tel appareil comprend au moins, de l'amont vers l'aval, un pré-filtre, une unité de traitement et un ventilateur, alors que l'ensemble de filtration de traitement est disposé en aval de cette unité et en amont ou en aval de ce ventilateur. Ceci permet de contrôler, grâce à l'unité de traitement, l'efficacité de la photo-catalyse qui est influencée par la température et l'humidité de l'air qui parvient au contact du média filtrant. Cependant, l'ensemble de filtration peut également être installé dans une autre partie d'un appareil de conditionnement d'air qui ne comporte pas nécessairement de pré-filtre ou de ventilateur.

L'invention sera mieux comprise et d'autres avantages de celle-ci apparaîtront plus clairement à la lumière de la description qui va suivre d'un mode de réalisation d'un appareil de conditionnement d'air conforme à son principe, équipé d'un ensemble de filtration et de traitement conforme à son principe, donnée uniquement à titre d'exemple et faite en référence aux dessins annexés dans lesquels :
- la figure 1 est une coupe longitudinale de principe d'un appareil de conditionnement d'air conforme à l'invention ;
- la figure 2 est une vue de côté éclatée de l'ensemble de filtration et de traitement équipant l'appareil de la figure 1 ;
- la figure 3 est une coupe à plus grande échelle du détail III à la figure 2 ; et
- la figure 4 est une vue en perspective éclatée de l'ensemble de la figure 2.

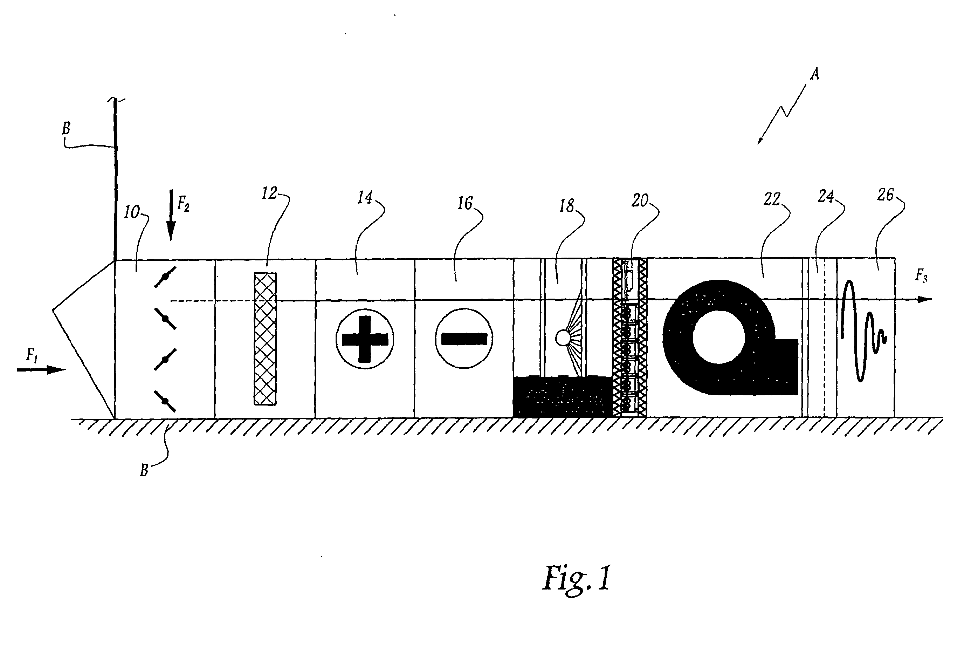

L'appareil A représenté à la figure 1 est prévu pour aspirer de l'air à la fois à l'extérieur et à l'intérieur d'un bâtiment B. Pour ce faire, l'appareil A est équipé d'un caisson de pré-mélange 10 qui peut être alimenté en air à partir de l'extérieur, comme représenté par la flèche F₁, et à partir de l'intérieur du bâtiment B, comme représenté par la flèche F₂.

En aval du caisson 10 est disposé un pré-filtre 12 destiné à retenir les impuretés les plus grossières.

Une batterie chaude 14, une batterie froide 16 et un humidificateur 18 sont disposés successivement en aval du pré-filtre 12 et sur le trajet d'écoulement de l'air dans l'appareil A, cet écoulement étant représenté par la flèche F₃. Les éléments 14 à 18 constituent des unités de traitement permettant de modifier certaines propriétés physiques de l'air traversant l'appareil A.

Un filtre 20 permettant de traiter l'air transitant par l'appareil A est disposé en aval de l'humidificateur 18 et en amont d'un ventilateur 22 dont la sortie est raccordée à un filtre finisseur 24 en aval duquel est disposé un piège à son 26.

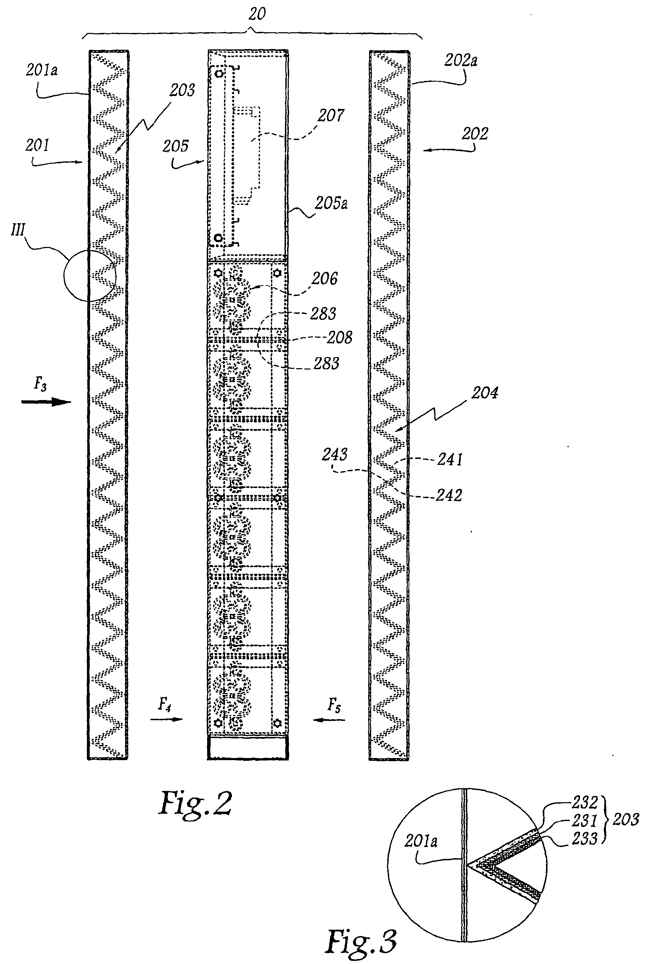

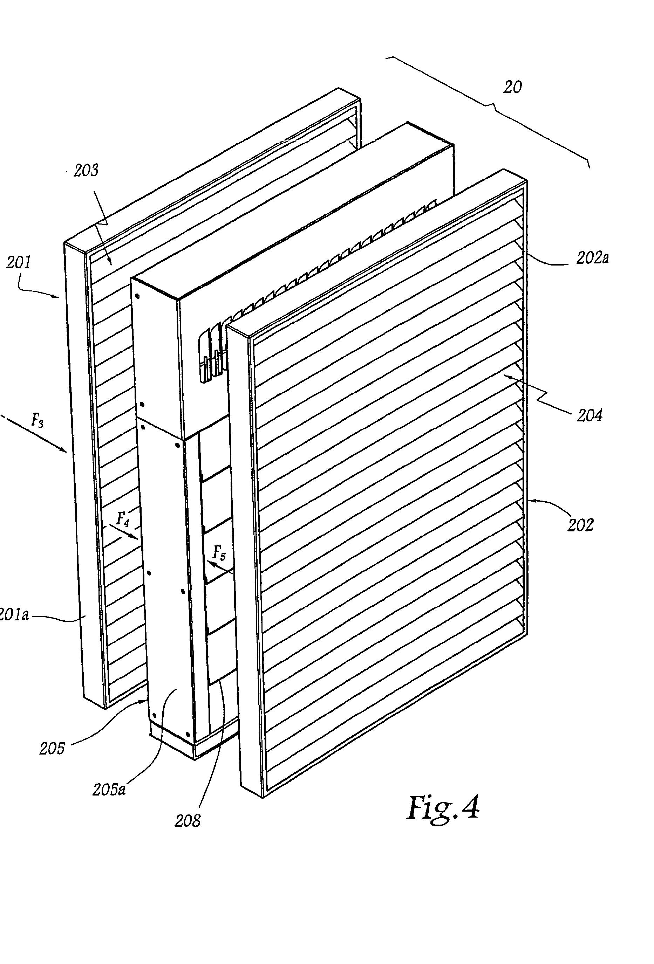

La structure du filtre 20 ressort plus particulièrement des figures 2 à 4. Ce filtre comprend deux modules filtrants 201 et 202 à l'intérieur desquels est disposé une bande de média filtrant 203, respectivement 204.

Le média filtrant 203 disposé dans le module filtrant amont 201 est plissé ou plié en « zigzags » à l'intérieur de la carcasse 201a de ce module et comprend un support perméable 231 dont le côté amont est revêtu d'une couche 232 de charbon actif et dont le côté aval est revêtu d'une couche 233 de TiO₂. Bien entendu, d'autres agents catalyseurs pourraient être utilisés dans le cadre de la présente invention, tels que, notamment, d'autres oxydes métalliques, des oxydes alcalino-terreux, des oxydes d'actinides ou des oxydes de terres rares.

De même, des agents d'adsorption autres que du charbon actif peuvent être utilisés, tels que, notamment, des zéolithes ou des résines de polymères.

Le média filtrant peut, sans que cela soit une obligation, être conforme à l'enseignement technique de FR-A-2 812 825.

Le média filtrant 204 disposé dans la carcasse 202a du module de filtration aval 202 est constitué à partir du même matériau que le média 203, avec un support perméable 241, une couche 242 de charbon actif et une couche 243 de TiO₂. La couche 242 est disposée sur le côté aval du support 241 alors que la couche 243 est disposée sur son côté amont.

Un module d'éclairement 205 est intercalé entre les modules 201 et 202 et comprend une carcasse 205a qui contient des lampes à ultra-violets 206 fonctionnant à puissance constante afin d'optimiser la durée de vie du système. Ces lampes sont alimentées en courant à partir d'un ou plusieurs ballasts 207 disposés dans la carcasse 205a. Elles sont séparées l'une de l'autre par des plaques séparatrices 208 dont les faces supérieure et inférieure sont revêtues de couches 283 de TiO₂. D'autres agents photocatalyseurs peuvent être employés ici. En pratique, ce sont les mêmes que ceux utilisés dans le média filtrant.

On note que les plaques séparatrices 208 sont optionnelles, leur fonction étant d'optimiser le phénomène de photo-catalyse en phase gazeuse.

Le flux d'air traverse successivement les modules 201, 205 et 202 qui forment conjointement le conduit d'écoulement du flux d'air F₃ dans l'ensemble 20. En particulier, les modules 201, 205 et 202 associés, qui forment la structure de l'ensemble 20, n'ont pas à être installés dans un conduit d'accès malaisé.

L'association du charbon actif et de l'agent photocatalyseur permet d'obtenir une épuration du flux d'air F₃ par adsorption physique des composés organiques au niveau du charbon actif et par photocatalyse au niveau des couches de TiO₂, le processus photocatalytique hétérogène mis en oeuvre se décomposant en cinq phases qui sont le transfert des réactifs gazeux vers la surface photocatalytique, l'adsorption des réactifs gazeux sur cette surface, la réaction photochimique entre les réactifs gazeux adsorbés et la minéralisation des composés organiques, la désorption des produits gazeux de la réduction photocatalytique et le transfert des produits gazeux hors de la surface photocatalytique. L'énergie apportée par le rayonnement ultra-violet issu des lampes 206 permet à un électron de la couche de TiO₂ de passer de la bande de valence à la bande de conduction de ce matériau, ce qui crée un site d'oxydation (trou h⁺) dans la bande de valence et un site de réduction (électron e⁻) dans la bande de conduction. Les trous h⁺ réagissent avec les donneurs d'électrons que sont les produits organiques à adsorber à la surface du TiO₂. Dans le même temps, les électrons e⁻ réagissent avec les accepteurs d'électrons.

Ainsi, l'électron de la bande de conduction peut-il être piégé par l'oxygène moléculaire O₂ alors que le trou de la bande de valence est piégé par les groupes hydroxyl superficiels basiques ou par l'eau adsorbée, ce qui permet de former des radicaux hydroxyl. On obtient ainsi un système oxydoréducteur et la formation de radicaux ou de ion-radicaux. Ces derniers se transforment, réagissent entre eux ou attaquent les composés organiques adsorbés par le TiO₂ qui sont ainsi dégradés.

Lors de la fabrication de l'ensemble 20, les éléments 201, 202 et 205 sont réunis pour constituer l'ensemble 20 et permettent de filtrer efficacement une quantité d'air se déplaçant à une vitesse frontale relativement rapide, supérieure à 2 m/s, et avec un débit relativement important.

On comprend qu'il est possible de pré-monter des modules de filtration du type du module 201 ou du module 202 avec des média filtrants de types différents, par exemple selon la nature du charbon actif utilisé, pulvérulent ou fibreux, ou selon la géométrie des média 203 et 204, notamment selon le type de pliage préféré.

Il est également possible de pré-monter des modules d'éclairement 205 comprenant des types de lampes 206 présélectionnées.

Il est alors possible d'assembler un ensemble 20 en fonction de l'utilisation prévue pour l'appareil A auquel il va être intégré ou du type et/ou des dimensions de cet appareil. En particulier, les modules 201 et 202 peuvent être sélectionnés, parmi plusieurs types de modules, en fonction du type de particules à traiter et/ou du ratio technico-économique recherché.

Le montage a lieu en rapprochant les modules 201, 202 et 205, comme représenté par les flèches F₄ et F₅, puis en solidarisant ces modules entre eux par tout moyen approprié, par exemple par des vis.

L'ensemble 20 est particulièrement simple à fabriquer mais également à utiliser car il n'est pas nécessaire de mettre en oeuvre un système de régulation, prenant en compte l'imminence du point de percée, comme dans certains systèmes connus.

Les modules 201, 202 et 205 sont, de préférence, assemblés de façon réversible, ce qui permet de les séparer pour accéder aux lampes 206, notamment lors d'opérations de maintenance.

La structure de l'ensemble 20 permet également d'optimiser ses conditions de fonctionnement, la température de l'air transitant par l'ensemble 20 pouvant être comprise entre 10 et 60°C, alors que sont humidité relative peut être comprise entre 15% et 95%.

En particulier, les composés organiques du flux d'air F₃ sont adsorbés par le charbon actif de la couche 232. On observe une désorption permanente entre les couches 232 et 233. Les composés organiques non transformés au niveau du média 203 et les composés intermédiaires, qui résultent d'une oxydo-réduction partielle au niveau de ce média, sont ensuite traités au niveau du média 204.

L'ensemble 20 permet d'envisager une destruction complète des polluants organiques d'un écoulement d'air par leur minéralisation.

L'invention permet, en particulier, le traitement d'un flux d'air contenant des composés organiques volatiles (COV) ou semi-volatiles, du perchloroéthylène, de 2-butène, des anisoles, des phénols, de l'ozone, des chloramines, des lindanes et/ou des mélanges de ces produits. L'invention permet également de traiter un flux d'air contenant des composés générant des odeurs, comme les mercapants ou la fumée de cigarette. L'invention permet, en outre, de traiter un flux d'air contenant des microorganismes vivants potentiellement pathogènes, tels que des bactéries, comme Legionella Pneumophila ou des staphylocoques, ou bien des virus, comme le virus du SRAS.

Selon une variante non représentée de l'invention, l'appareil A peut être conçu de telle sorte que le filtre 20 est en aval du ventilateur 22.

L'invention a été présentée avec un ensemble 20 unitaire. Elle est cependant applicable avec un ensemble formé d'éléments dissociés.

## Revendications

1. Ensemble de filtration et de traitement de composés organiques pour appareil de conditionnement d'air comprenant au moins un média filtrant, alors que :
- ledit média filtrant (203, 204) comprend un agent d'adsorption (232, 242) et un agent photocatalyseur (233, 243) ;
- ledit média filtrant est réparti dans deux modules filtrants (201, 202) destinés à être successivement traversés par le flux d'air (F₃) à filtrer et traiter et
- des moyens (206) d'éclairement de l'agent photocatalyseur sont intercalés entre lesdits modules filtrants (201, 202),
**caractérisé en ce que** lesdits moyens d'éclairement (206) sont disposés dans un module (205) traversé par le flux (F₃) d'air à filtrer et constituant, avec lesdits modules filtrants (201, 202), ledit ensemble de filtration (20).

2. Ensemble selon la revendication 1, **caractérisé en ce que** l'agent d'adsorption (232, 242) et l'agent photocatalyseur (233, 243) sont répartis respectivement sur un ou respectivement les deux côtés d'un support perméable (231, 241).

3. Ensemble selon l'une quelconque des revendications précédentes, **caractérisé en ce que** l'agent d'adsorption (232, 242) est réparti sur le côté amont du média filtrant (203) disposé dans le module filtrant amont (201) et sur le côté aval du média filtrant (204) disposé dans le module filtrant aval (202), alors que l'agent photocatalyseur (233, 243) est réparti sur le côté aval du média filtrant (203) disposé dans le module filtrant amont (201) et sur le côté amont du média filtrant (204) disposé dans le module filtrant aval (202).

4. Ensemble selon l'une des revendications précédentes, **caractérisé en ce que** lesdits modules (201, 202, 205) sont assemblés entre eux de façon réversible.

5. Ensemble selon l'une des revendications précédentes, **caractérisé en ce que** ledit module d'éclairement (205) incorpore des lampes à ultra-violets (206) et, éventuellement, des dispositifs (207) d'alimentation desdites lampes.

6. Ensemble selon l'une des revendications précédentes, **caractérisé en ce que** ledit module d'éclairement (205) est pourvu d'au moins une plaque (208) séparant deux lampes voisines (206) et revêtue, sur l'une au moins de ses faces, d'agent photocatalyseur (283).

7. Ensemble selon l'une des revendications précédentes, **caractérisé en ce que** ledit média-filtrant (203, 204) est plissé dans lesdits modules filtrants (201, 202).

8. Procédé de fabrication d'un ensemble selon l'une des revendications précédentes, **caractérisé en ce qu'**il comprend des étapes consistant à :
- sélectionner les carcasses (201a, 202a, 205a) desdits modules (201, 202, 205) en fonction des dimensions de l'appareil de conditionnement d'air (A) à équiper ;
- sélectionner le média filtrant (203, 204) en fonction du type de particules à traiter ;
- sélectionner le type, le nombre et la puissance des lampes (206) du module d'éclairement (205) et
- intercaler ledit module d'éclairement (205) entre lesdits modules filtrants (201, 202).

9. Procédé selon la revendication 8, **caractérisé en ce qu'**il comprend en outre une étape consistant à assembler (F₄, F₅) lesdits modules (201, 202, 205) en un ensemble unitaire (20) prêt à être intégré dans ledit appareil (A).

10. Appareil de conditionnement d'air (A), notamment pour bâtiment, équipé d'un ensemble de filtration et de traitement (20) selon l'une des revendications 1 à 7.

11. Appareil selon la revendication 10 comprenant au moins, de l'amont vers l'aval, un pré-filtre (12), une unité de traitement (14-18) et un ventilateur (22), **caractérisé en ce que** ledit ensemble de filtration et de traitement (20) est disposé en aval de ladite unité et en amont ou en aval dudit ventilateur (22).

## Claims

1. An assembly for filtration and treatment of organic compounds for an air-conditioning apparatus, including at least one filtering medium, wherein:
- said filtering medium (203, 204) includes an adsorption agent (232, 242) and a photocatalytic agent (233, 243);
- said filtering medium is distributed in two filtering modules (201, 202) intended to be traversed successively by the flow of air (F₃) to be filtered and treated and
- means (206) for illuminating the photocatalytic agent are interposed between said filtering modules (201, 202), **characterised in that** said illumination means (206) are arranged in a module (205) which is traversed by the flow (F₃) of air to be filtered and which constitutes, with said filtering modules (201, 202), said filtration assembly (20).

2. Assembly according to Claim 1, **characterised in that** the adsorption agent (232, 242) and the photocatalytic agent (233, 243) are distributed, respectively, over one side or, respectively, both sides of a permeable support (231, 241).

3. Assembly according to any one of the preceding claims, **characterised in that** the adsorption agent (232, 242) is distributed over the upstream side of the filtering medium (203) arranged in the upstream filtering module (201) and over the downstream side of the filtering medium (204) arranged in the downstream filtering module (202), whereas the photocatalytic agent (233, 243) is distributed over the downstream side of the filtering medium (203) arranged in the upstream filtering module (201) and over the upstream side of the filtering medium (204) arranged in the downstream filtering module (202).

4. Assembly according to any one of the preceding claims, **characterised in that** said modules (201, 202, 205) are fitted together in reversible manner.

5. Assembly according to any one of the preceding claims, **characterised in that** said illumination module (205) incorporates ultraviolet lamps (206) and possibly devices (207) for supplying power to said lamps.

6. Assembly according to any one of the preceding claims, **characterised in that** said illumination module (205) is provided with at least one plate (208) which separates two adjacent lamps (206) and which is coated with photocatalytic agent (283) on at least one of its faces.

7. Assembly according to any one of the preceding claims, **characterised in that** said filtering medium (203, 204) is pleated in said filtering modules (201, 202).

8. A method for producing an assembly according to one of the preceding claims, **characterised in that** it comprises steps consisting in:
- selecting the frames (201a, 202a, 205a) of said modules (201, 202, 205) as a function of the dimensions of the air-conditioning apparatus (A) to be equipped;
- selecting the filtering medium (203, 204) as a function of the type of particles to be treated;
- selecting the type, the number and the power of the lamps (206) of the illumination module (205) and
- interposing said illumination module (205) between said filtering modules (201, 202).

9. Method according to Claim 8, **characterised in that** it includes, in addition, a step consisting in assembling (F₄, F₅) said modules (201, 202, 205) into a unitary assembly (20) ready to be integrated into said apparatus (A).

10. An air-conditioning apparatus (A), in particular for a building, which is equipped with a filtration and treatment assembly (20) according to one of Claims 1 to 7.

11. Apparatus according to Claim 10, including at least, from upstream to downstream, a primary filter (12), a treatment unit (14-18) and a fan (22), **characterised in that** said filtration and treatment assembly (20) is arranged downstream of said unit and upstream or downstream of said fan (22).

## Patentansprüche

1. Anordnung zur Filterung und Behandlung organischer Verbindungen für ein Klimatisierungsgerät, die mindestens ein Filtermedium umfasst, wobei:
- das Filtermedium (203, 204) eine Adsorptionssubstanz (232, 242) und eine Photokatalysatorsubstanz (233, 243) umfasst;
- das Filtermedium in zwei Filtermodulen (201, 202) verteilt ist, die dazu bestimmt sind, nacheinander vom Luftstrom (F₃) durchquert zu werden, der zu Filtern und zu Behandeln ist, und
- Beleuchtungsmittel (206) der Photokatalysatorsubstanz, die zwischen die Filtermodule (201, 202) eingefügt sind,
**dadurch gekennzeichnet, dass** die Beleuchtungsmittel (206) in einem Modul (205) angeordnet sind, das vom Luftstrom (F₃) durchquert wird, der zu filtern ist, und das mit den Filtermodulen (201, 202) die Filteranordnung (20) bildet.

2. Anordnung nach Anspruch 1, **dadurch gekennzeichnet, dass** die Adsorptionssubstanz (232, 242) und die Photokatalysatorsubstanz (233, 243) jeweils auf einer oder jeweils beiden Seiten eines durchlässigen Trägers (231, 241) verteilt sind.

3. Anordnung nach irgend einem der vorhergehenden Ansprüche, **dadurch gekennzeichnet, dass** die Adsorptionssubstanz (232, 242) auf der stromaufwärtigen Seite des Filtermediums (203), das in dem Filtermodul stromaufwärts (201) angeordnet ist, und auf der stromabwärtigen Seite des Filtermedium (204), das in dem Filtermodul stromabwärts (202) angebracht ist, verteilt ist, wobei die Photokatalysatorsubstanz (233, 243) auf der stromabwärtigen Seite des Filtermediums (203), das im Filtermodul stromaufwärts (201) angebracht ist, und auf der stromaufwärtigen Seite des Filtermediums (204), das in dem Filtermodul stromabwärts (202) angebracht ist, verteilt ist.

4. Anordnung nach einer der vorhergehenden Ansprüche, **dadurch gekennzeichnet, dass** die Module (201, 202, 205) untereinander reversibel zusammengefügt sind.

5. Anordnung gemäß einer der vorhergehenden Ansprüche, **dadurch gekennzeichnet, dass** das Beleuchtungsmodul (205) Ultraviolettlampen (206) und gegebenenfalls Vorrichtungen (207) zur Versorgung dieser Lampen beinhaltet.

6. Anordnung nach einer der vorhergehenden Ansprüche, **dadurch gekennzeichnet, dass** das Beleuchtungsmodul (205) mit mindestens einer Platte (208) ausgestattet ist, die die beiden benachbarten Lampen (206) trennt, und mindestens auf einer ihrer beiden Seitenflächen mit der Photokatalysatorsubstanz (283) versehen ist.

7. Anordnung nach einer der vorhergehenden Ansprüche, **dadurch gekennzeichnet, dass** das Filtermedium (203, 204) in den Filtermodulen (201, 202) gefaltet ist.

8. Verfahren zur Herstellung einer Anordnung nach einer der vorhergehenden Ansprüche, **dadurch gekennzeichnet, dass** es die Schritte umfasst, bestehend aus:
- Auswählen der Gestelle (201a, 202a, 205a) für die Module (201, 202, 205) unter Berücksichtigung der Abmessungen des Klimatisierungsgeräts (A), das auszustatten ist;
- Auswählen des Filtermediums (203, 204) unter Berücksichtigung der Partikelarten, die zu behandeln sind;
- Auswählen der Art, der Anzahl und der Leistung der Lampen (206)des Beleuchtungsmoduls (205) und
- Einfügen der Beleuchtungsmodule (205) zwischen die Filtermodule (201, 202).

9. Verfahren nach Anspruch 8, **dadurch gekennzeichnet, dass** es ferner einen Schritt umfasst, der darin besteht, die Module (201, 202, 205) in eine Anordnungseinheit (20) so zusammenzufügen (F₄, F₅), dass sie in das Gerät (A) eingebaut werden kann.

10. Klimatisierungsgerät (A), insbesondere für Gebäude, das mit einer Anordnung zur Filterung und Behandlung (20) gemäß einer der Ansprüche 1 bis 7 ausgestattet ist.

11. Gerät nach Anspruch 10, das, von stromaufwärts nach stromabwärts, mindestens einen Vorfilter (12), eine Behandlungseinheit (14 bis 18) und einen Ventilator (22) umfasst, **dadurch gekennzeichnet, dass** die Anordnung zur Filterung und Behandlung (20) stromabwärts der Einheit und stromaufwärts oder stromabwärts des Ventilators (22) angebracht ist.
